# EUROPEAN PATENT APPLICATION

(11) **EP 2 078 457 A1**
(43) Date of publication of application: **15.07.2009**
(21) Application number: 08150164.5
(22) Date of filing: 10.01.2008
(51) Int. Cl.: A01K 87/00

(54) **A fishing rod having a multiple tube structure and a related manufacturing method**

(71) Applicant: Prince Sports, Inc., Bordentown NJ 08505 (US)
(72) Inventor: Davis, Stephen J., Newtown, PA 18940 (US); Gazzara, Roberto, 30171, Mestre (VE) (IT); Pezzato, Mauro, 31100, Treviso (IT); Pozzobon, Michele, 31050, Fossalonga di Vedelago (TV) (IT); Pinaffo, Mauro, 35012, Camposampiero (PD) (IT)
(74) Representative: Zanoli, Enrico

(57) **Abstract**

A structure for a fishing rod system (10) comprising multiple composite tubes (22) bonded to one another, wherein apertures, or "ports" (20,20a) are molded between the tubes to improve the stiffness, strength, aerodynamics and comfort of the fishing rod.

## Description

The present invention relates to a fishing rod and, more particularly, to a fishing rod having a composite structure with multiple tubes.

The present invention relates also to a method for manufacturing a fishing rod.

There exists a continuing need for an improved fishing rod that has the combined features of improved aerodynamics, light weight, improved bending stiffness, and improved strength.

The performance of a fishing rod is determined by a number of factors such as weight, bending flex, bending flex distribution, torsional stiffness, and strength.

Traditional fishing rods comprise a single tubular structure with a tapered circular cross section and a hollow interior. The wall thickness can vary along its length to provide specific performance needs. Light weight composite materials are generally used for the rod structure.

The weight of a fishing rod is a critical feature in determining performance. The lighter the rod weight, the easier it is to swing the rod resulting in longer casting distances.

Therefore, the lightest materials and designs are used to achieve these performance goals.

The most popular high performance material for modem fishing rod design is carbon fiber reinforced epoxy resin (CFE) because it has the highest strength and stiffness to weight ratio of any realistically affordable material. As a result, CFE can produce a very light weight fishing rod with excellent strength as well as providing a variety of stiffnesses.

The stiffness and stiffness distribution of a fishing rod are also important factors in determining the performance of a fishing rod.

The bending stiffness of the fishing rod needs to match the forces created by the acceleration imposed by the casting motion in order to have the proper recovery to deliver the bait to the intended target.

There are numerous casting motions and directions.

For example, a cast can vary from a vertical casting plane to a horizontal casting plane. These two casting motions will load the rod in directions perpendicular to each other. The vertical cast, or overhead cast, is capable of a higher acceleration and therefore higher load on the rod. The horizontal cast is more a controlled cast, for example under tree limbs where motion is limited, and therefore would benefit from a more flexible rod.

Carbon fiber composites offer very high stiffness to weight ratios, and because of their anisotropic properties offered, can be tailored to provide different stiffness in different directions and locations along the length of the fishing rod.

However, there are limitations based on the traditional design of the single tube fishing rod.

There are further limitations on carbon fiber based materials used for fishing rod structures when considering strength requirements. A fishing rod made from carbon fiber composite can be susceptible to catastrophic failure resulting from excessive compressive forces which cause buckling of the thin walled tube.

A fishing rod is, in fact, subjected to a multitude of stress conditions. There are mainly bending loads from casting or the pull of a fish. There are also impact loads and vibrational loads. In addition, there are high stress concentrations where the reel connects to the rod. The clamping mechanism to attach the reel to the rod can impose a large circumferential compressive stress on the rod in this area. Furthermore, the line guides can exert forces on the rod in these locations. For this reason, the wall thickness of the rod is the greatest in these areas. As a result, the rod can be heavier than desired.

As mentioned above, the evolution of the fishing rod technology over the past twenty years has focused on improving light weight, stiffness, and strength. However, there has not yet been a fishing rod that has meaningfully improved casting distance, or provided anisotropic behavior in different directions.

Traditional fishing rods are manufactured with relatively complex and expensive processes.

The most common method of producing a traditional composite fishing rod is to start with a raw material in sheet form known as "prepreg" which are reinforcing fibers impregnated with a thermoset resin such as epoxy. The resin is in a "B Stage" liquid form which can be readily cured with the application of heat and pressure. The fibers can be woven like a fabric, or unidirectional, and are of the variety of high performance reinforcement fibers such as carbon, aramid, glass, etc. The prepreg commonly comes in a continuous roll or can be drum wound which produces shorter sheet length segments. The prepreg is cut at various angles to achieve the correct fiber orientation, and these strips are typically overlapped and positioned in a "lay-up" which allows them to be rolled up over a mandrel to form a perform. In order to pressurize and consolidate the prepreg plies, external pressure must be applied. This is commonly done by wrapping a polymer "shrink tape" around the exterior of the pre-form which will apply pressure upon the application of heat in a curing oven. The mandrel determines the internal geometry of the fishing rod. The thickness of the consolidated laminate plies determines the external geometry of the rod, which cross section is generally circular because of the rolling process.

There have been numerous patents describing this construction/process such as U.S. Pat. No. 2,749,643 to Scott, U.S. Pat. No. 3,421,347 to Hubbard, and U.S. Pat. No. 4,061,806 to Lindler and Taras.

Other notable patents producing a single hollow tube are U.S. Pat. No. 4,178,713 to Higuchi;

U.S. Pat. No. 4,653,216 to Inoue; U.S. Pat. No. 6,454,691 to Hsu; U.S. Pat. No. 6,601,334 to Ono et. al.; and U.S. Pat. No. 7,043,868 to Ahn.

Other notable designs involve the line traveling inside the rod, some of which involve an internal structure to facilitate this feature.

Examples are U.S. Pat. No. 5,564,214 to Tsurufuji; U.S. Pat. Nos.6,048,425 and 6,543,178 to Sunaga et. al.; U.S. Pat. No.6,243,981 to Komura et. al.; and U.S. Pat. Nos. 6,266,913, 6,334,272, and 6,351,909 to Akiba et.al.

Of particular note is the U.S. Pat. Application No. 60/879,421 to Davis, et. al., that describes a fishing rod having a single primary tube with ports that extend through aligned holes on opposite sides of the hollow tube.

The main aim of the present invention is to provided a fishing rod and a related manufacturing method, which overcome the drawbacks of the prior art.

Thus, the present invention provides a fishing rod, according to the following claim 1.

In general terms, the basis of the design of the present invention is to replace a single tube portion with a multiple, e.g., double tube, structure, according to which multiple tubes are fused together along much of their lengths, so as to form an internal wall.

The tubes preferably are separated from one another at selected locations to form apertures that act as double opposing arches, providing improved aerodynamics, light weight, improved bending stiffness, and improved strength.

This allows the obtaining of an improved fishing rod, which is of durable and reliable construction , which improves the aerodynamics during casting.

The fishing rod, according to the invention, may be arranged to have specific stiffness zones at various orientations and locations along the length of the rod. Thus, it is possible to remarkably improve the torsional stiffness of the rod and achieve a superior strength and fatigue resistance, an improved shock absorption and improved vibration damping characteristics.

The fishing rod, according to the invention, has also a unique look and improved aesthetics.

The present invention provides also a method for manufacturing a fishing rod according to the following 14.

As it will appear more evident in the following, such a manufacturing method can be easily and efficiently carried out at industrial level, at low cost with regard to both materials and labor.

For a better understanding of the invention and its advantages, reference should be made to the accompanying drawings and descriptive matter in which:
figure 1 is an isometric view of a fishing rod constructed in accordance with an embodiment of the present invention; and
figure 1A is a cross sectional view of the fishing rod taken along lines 1A-1A of Figure 1; and
figure 1B is a cross sectional view of the fishing rod taken along lines 1B-1B of Figure 1; and
figure 1C is an isometric cut away view of a portion of the fishing rod shown in Figure 1, and
figure 2 is a side view of a fishing rod constructed in accordance with an alternative embodiment of the present invention; and
figure 2A is a longitudinal sectional view of a portion of the fishing rod taken along lines 2A-2A in Figure 2; and
figure 3 is an isometric view of the fishing rod constructed with a multiple tube design; and
figure 3A is a cross section of the fishing rod in Figure 3 taken along lines 3A-3A; and
figure 3B is a cross section of the fishing rod in Figure 3 taken along lines 3B-3B; and
figure 3C is an isometric cutaway view of a portion of the fishing rod shown in Figure 3; and
figure 4 shows an alternative example of how multiple ports could be oriented in a multiple tube construction; and
figure 4A is a cross sectional view along the lines 4A-4A of Figure 4; and
figures 5A-5D show various shapes of ports; and
figures 6-7 are perspective views schematically illustrating a process for forming a frame member of two different materials; and
figure 8 is an isometric view of an alternative design of the handle area of the fishing rod.

The same reference numerals refer to the same parts throughout the various Figures.

Referring to the cited figures, the present invention is related to a fishing rod 10, which is formed of two or more tubes 22, preferably made of composite material.

First portions 22a of said tubes form an outer wall 10a of said rod and define a rod interior 10b. Second portions 22b of said tubes extend across the rod interior 10b and are bonded to one another, at least along some of the length of said rod, thereby to form an internal reinforcing wall 24.

This common wall 24 improves the bending strength of the fishing rod 10 by acting as a brace to resist the compressive loads, which can buckle the structure.

However, at selected locations, the facing surfaces 22b of the tubes 22 are kept apart during molding, to form openings 20, 20a.

These openings may be relatively enlarged and advantageously pass through the entire section fo the fishing rod 10. On either side of the openings, the tubes are joined together.

The openings 20, 20a so formed, without drilling any holes or severing any reinforcement fibers, will be hereinafter referred as "ports", for the sake of brevity.

The resulting structure is found to have superior performance characteristics for several reasons. The ports are in the shape of double opposing arches which allow the structure to deflect which deforms the ports, and return with more resiliency.

The ports improve the aerodynamics of the rod, allowing air to pass through the port, resulting in faster casting distances.

The ports also allow greater bending flexibility than would traditionally be achieved in a traditional single tube design. The internal wall between the hollow tubes adds strength to resist compressive buckling loads.

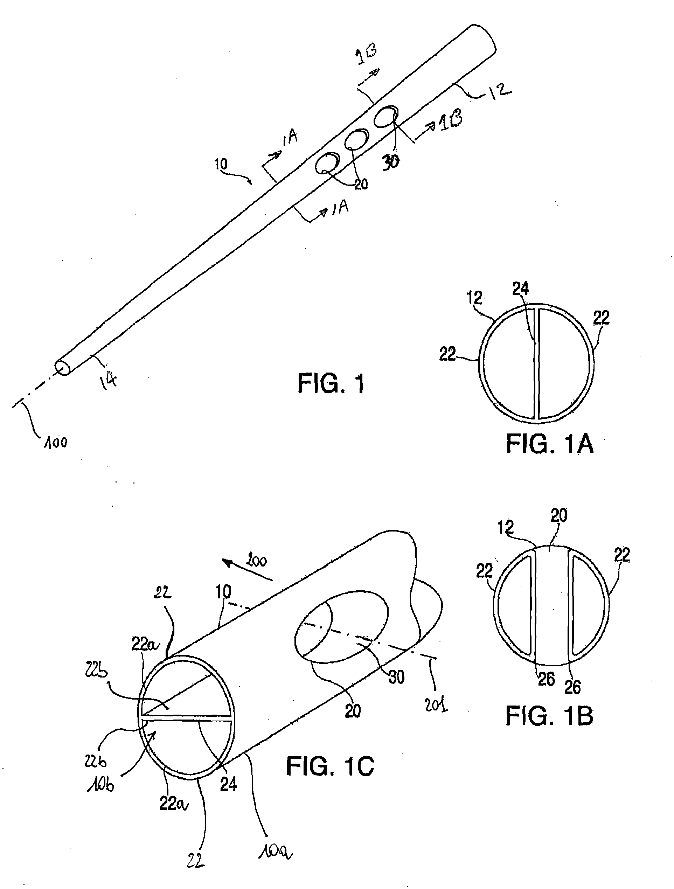

With greater reference to Figure 1 of the drawings, the rod 10 features geometric shapes, which improve the flexibility, strength and other playing characteristics.

The rod comprises a handle end 12, about which a grip and reel are normally attached, and a tip end 14, to which a loop shaped line guide is attached.

The rod 10 is preferably fabricated of multiple layers of aligned carbon filaments held together with an epoxy binder, i.e., so-called "graphite" material. The fibers in the various plies are parallel to one another, but the various plies preferably have varying fiber orientations.

Of course, the fishing rod 10 may comprise portions made of other materials such as other composite materials, plastic materials or metallic materials.

The rod 10 has a long, generally hollow structure, the section of which may be of any shape. Preferably, the rod 10 has a substantially circular section, with a diameter varying along the rod longitudinal axis 100 and which preferably tapers from the handle end 12 to the tip end 14.

A plurality of ports 20 are formed in the rod 10, preferably near the handle end 12. The ports extend between opposed walls of the rod, as described further below. Each port is preferably oval in shape, with the long axis of the oval in line with the longitudinal axis of the rod. Each port 20 is defined by a peripheral wall 30 that extends between a front side and a rear side of the rod.

As used herein, the front side of the rod refers to the surface where the line guides (not shown) of the rod are mounted, in the direction of an overhead cast. The opposite side of the rod refers to another surface opposite to said surface with respect to the longitudinal axis 100.

The ports 20 are preferably in the shape of double opposing arches, which allow the structure to deflect, which deforms the ports, and return with more resiliency.

The ports 20 also allow greater bending flexibility for casting swings in plane with the port axes 201 because of the open structure of the rod 10 decreases sectional properties. In addition, strength is greater than would traditionally be achieved in a traditional single tube design because the internal wall 24 between the tubes 22 and the internal columns of each port 20 help prevent buckling failures of the thin walled tubular rod.

If the axes 201 of the ports 20 are in line with the casting direction 200, they can provide an aerodynamic advantage, allowing air to pass through the rod resulting in faster swing speeds and further casts.

Finally, the ports 20 create a unique appearance to the fishing rod 10.

Figure 1A shows the two hollow tubes 22 which form the structure of the rod in this embodiment.

The hollow tubes 22 are joined together to form the internal wall 24. The preferred location of the internal wall 24 is near the longitudinal axis 100 of the rod 10. Both of the hollow tubes 22 should be about the same size and, when molded, form a "D" shape.

Figure 1B shows that, at the locations of the ports 20, the hollow tubes 22 are separated from one another to form the walls defining the ports 20. It is advisable to have a radius (i.e., rounded edges 26) leading into the port so to reduce the stress concentration and to facilitate the molding process.

Figure 1C is an isometric view of the fishing rod 10 isolated to one port 20, which shows the two hollow tubes 22 and the internal wall 24. Also shown is the port 20 formed by the curved wall 30 which may have the shape of a portion of a cylinder. In this particular example, the axis of the port is 90 degrees to the main axis 100 of the tube.

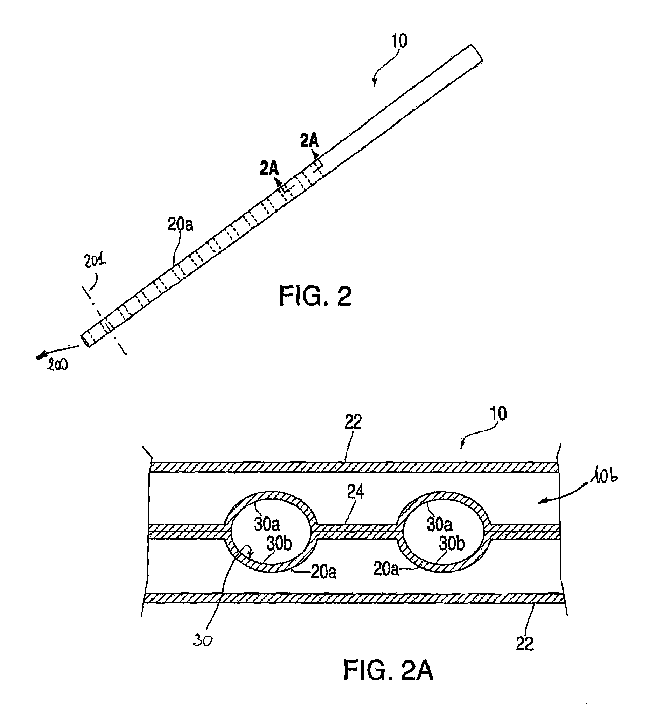

An alternative embodiment is to form ports 20a, which are oriented so the axes 201 are perpendicular to the direction of casting 200, as shown in Figure 2.

Ports oriented in this manner provide a more traditional stiffness of the fishing rod 10 in the plane of the cast with the benefit of increased strength of the rod. In addition, as the rod bends, the ports deform and return, providing a rod of greater resiliency.

Conversely, ports oriented in this manner will create a more flexible rod for out of plane bending, meaning a casting direction in plane with the axes of the ports.

Figure 2A is a longitudinal section view taken along the lines 2A-2A in Figure 2.

It shows that, at locations other than the ports, the hollow tubes 22 are positioned side-by-side and are fused together along much of their lengths to form the common wall 24 that extends across the diameter of the rod 10, i.e., bisects the rod interior 10b.

As mentioned above, the internal wall 24 provides structural reinforcement to resist deformations and buckling failures.

At selected locations, e.g., where ports 20a are to be formed, the facing surfaces 30a and 30b of the tubes 22 are separated during molding to form apertures 20a in the shape of double opposing arches to form the wall 30 of the port 20a. Said opposing arches act as geometric supports to allow deformation and return.

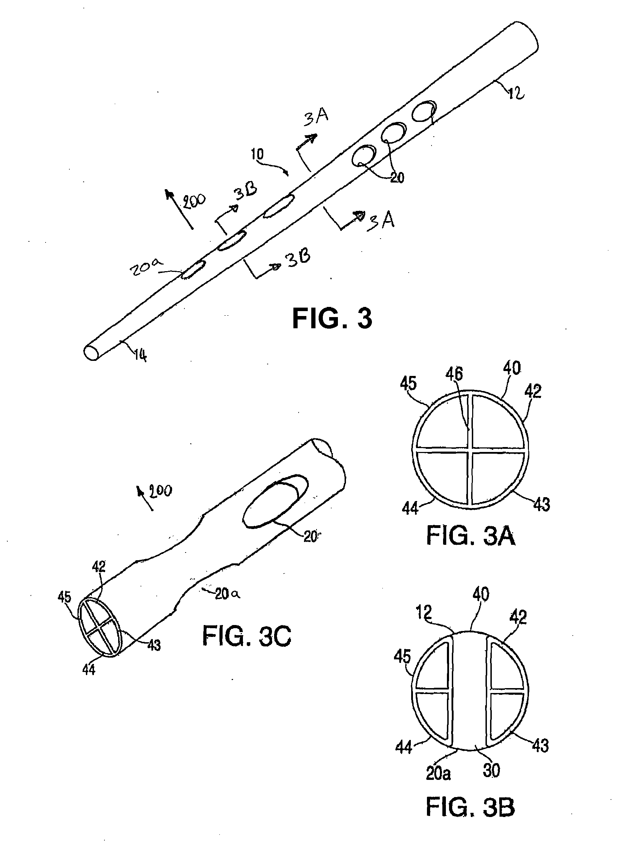

Figure 3 shows an alternative embodiment of the fishing rod 10 comprised of a multiple tube construction which allows for ports 20 and ports 20a to be oriented at different angles.

In this particular example, the ports 20a near the tip 14 are in line with the direction of casting 200, in order to provide greater in flexibility in this area. The ports 20 near the grip end 12 are oriented perpendicular to the direction of casting 200, which will provide a traditional stiffness with increased strength.

Therefore, a fishing rod with this type of design would be considered to have a flexible tip region and a more traditional handle region.

It is also possible to do the opposite or any combination desired.

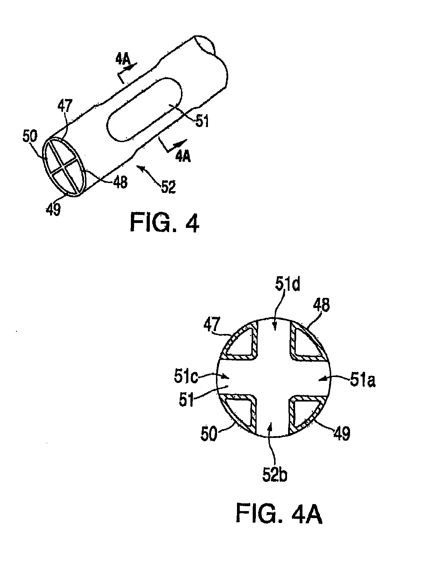

In the example of Figure 3A, which is taken along the lines 3A-3A of Figure 3, 4 tubes 42, 43, 44, 45 are used to create the tubular part with creates an internal wall 46 in the form of an "X". The Figure 3B cross section, taken along the lines 3B-3B of Figure 3, is in the region of port 20a which is oriented parallel to the casting direction.

In this example the hollow tubes 42 and 43 have remained together as well as hollow tubes 44 and 45. The tubes 42 and 43 are separated from the tubes 44 and 45 during molding to create the port 20a.

Figure 3C is an isometric view of a cutaway portion of the rod 10 of Figure 3 showing ports 20a oriented parallel to the direction of casting 200, and ports 20 oriented perpendicular to the direction of casting 200.

As described above in connection with Figures 3A and 3B, ports may be formed by separating two tubes from the other two tubes. In this example, to form port 20a, hollow tubes 42 and 43 have remained together as well as hollow tubes 44 and 45. To form port 20, hollow tubes 42 and 45 have remained together as well as hollow tubes 43 and 44.

Figure 4 is an isometric cutaway view of a four tube structure 52 with ports for all tubes positioned in the same location. In this example, hollow tubes 47, 48, 49, and 50 are all separated in the same location to form four ports 51 there between.

Figure 4A is a cross sectional view of the tube structure 52 in Figure 4 taken along the lines 4A-4A. Here it can be seen that because all hollow tubes are separated, there results in an open port 51 that has four openings 51a-d. This particular embodiment would provide more flexibility and resiliency for both in plane and out of plane conditions at the same location.

In a multiple tube design, there can be any number of ports and orientations of ports depending on the number of hollow tubes used and how many are separated to form these ports. In addition, for example with a 3 tube design, the axis 201 of the port would not necessarily have to pass through the center of the rod.

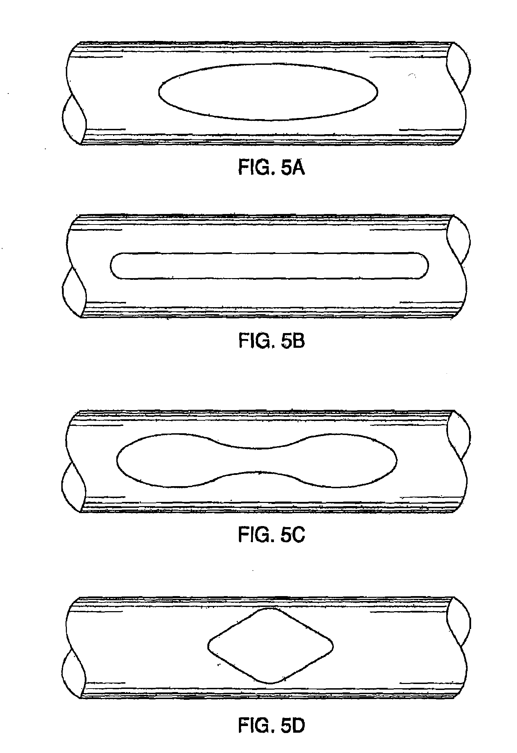

Figures 5A-5D illustrate some examples of the variety of shapes possible to be used for the ports. Depending on the performance required of the structure at a particular location, more decorative port shapes can be used.

The preferred embodiments of the present invention preferably use multiple composite tubes which are separated to form apertures in the form of double opposing arches 30a, 30b at various locations in the fishing rod 10, thereby defining the ports 20, 20a.

The single, hollow tube has been the traditional way to design and manufacture composite fishing rods. It makes sense from an efficiency viewpoint, that the single hollow tube maximizes properties of bending and light weight, since the material is displaced away from the central axis of the tube to maximize inertial properties. When a single hollow tube has a sufficient wall thickness, for example when weight is not critical, the design can sufficiently provide adequate stiffness and strength. However, as mentioned previously, when the wall thickness becomes thin relative to the diameter of the tube, the tubular part is susceptible to the wall buckling under the compressive forces which are always present in fishing rod.

In accordance with the present invention, conventional single hollow tubes forming the fishing rod 10 are replaced with multiple tubes 22 joined with an internal wall 24 in between.

The internal wall 24 resists deformation of the cross section under loading which resists the buckling of the wall under compressive forces.

The invention allows the rod 10 to be custom tuned in terms of its stiffness and resiliency by varying, in addition to the geometry of the fishing rod itself, the size, number, orientation and spacing of the ports in the fishing rod.

The invention also allows for various cross sectional shapes to be molded in the rod 10. For example, the rod may have an oval cross section, or ridges molded in. The rod can be made stiffer by adding one or more ridges on the external surface of the rod. For example, the placement of the ports in the rod will tend to decrease the rod stiffness in the areas defining the ports 20, 20a. The stiffness in these areas can be increased by defining ridges in the vicinity of the ports. Such ridges can be longitudinally or circumferentially disposed, and can be of limited length or can run the entire length of the rod. Additionally, the cross-sectional shape of the rod can also affect stiffness, particularly when such cross-sectional shapes define corners, such as with a polygonal or teardrop cross sectional shape. Note that if uniform stiffness is not desired, ridges may be added to increase the stiffness in some areas, while leaving other areas unaltered. Absent any ridges, the stiffness of the rod will be defined by the manner and angle at which the prepreg strips were laid out to form the basic hollow rod, as previously discussed.

The process of molding with composite materials facilitates the use of multiple tubes in a structure.

Basically, the fishing rod, according to the present invention, will require a molding technique that is different from traditional ones because the use of multiple tubes and forming ports requires internal pressure to consolidate the prepreg plies.

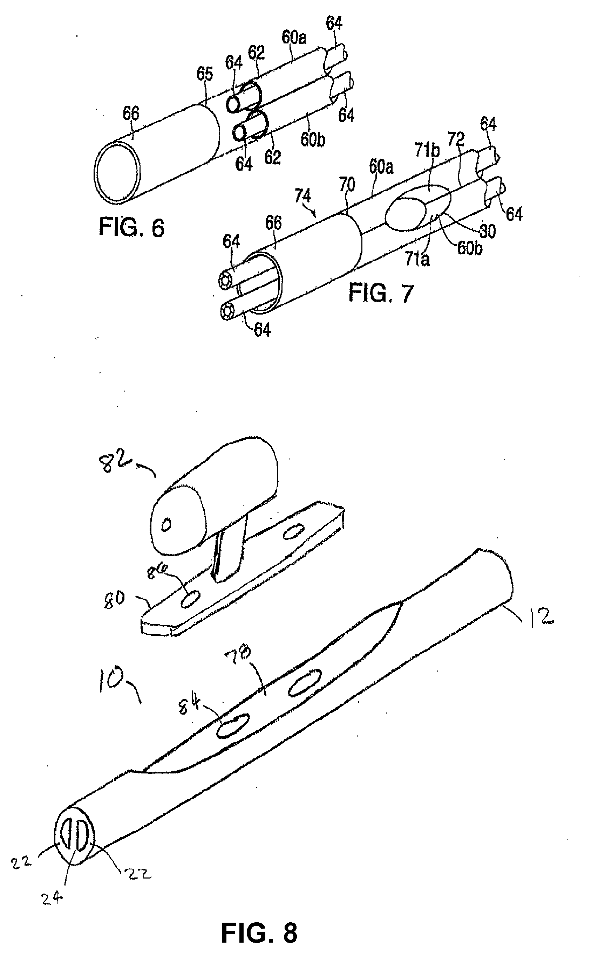

For example when molding the same fishing rod using two prepreg tubes 60a, 60b (figures 6-7), each tube should be approximately half the size of the single tube. A polymer inflatable bladder 64 may be inserted into the middle of each prepreg tube and used to generate internal pressure to consolidate the plies upon the application of heat.

The mold packing process consists of taking each prepreg tube and internal bladder and position into a mold cavity (not shown) and an air fitting (not shown) is attached to the bladder. The process is repeated for each tube depending on how many are used.

Care should be taken for the position of each tube so that the internal wall formed between the tubes is oriented properly, and that pins (not shown) can be inserted between the tubes in order to form the ports during pressurization.

The pins are secured into portions of the mold and are easily removed.

The mold is pressed closed in a heated platen press and air pressure for each tube should be applied simultaneously to retain the size and position of each tube and the formed wall in between. Since the rod is formed by internal pressurization inside a mold, the mold cavity defines the shape of the rod, which may be any according to the needs.

Simultaneously, the tubes will form around the pins to form the ports 20, 20a.

As the temperature rises in the mold, the viscosity of the epoxy resin decreases and the tubes expand, pressing against each other until expansion is complete and the epoxy resin is cross linked and cured. The mold is then opened, the pins removed, and the part is removed from the mold.

The internal wall of the molded tubular part adds significantly to improving the structural properties of the tubular part. For example, during bending or torsional deflection, the shape of the fishing rod is maintained much better, eliminating the tendency to buckle the cross section.

The orientation of the wall can be positioned to take advantage of the anisotropy it offers. If more bending flexibility is desired, the wall can be positioned along the neutral axis of bending. If greater stiffness is needed, then the wall can be positioned like an "I Beam" at 90 degrees to the neutral axis to improve the bending stiffness.

Molding the tubular parts using multiple tubes allows greater design options.

Separating the hollow tubes at selected axial locations along the rod in order to mold large oval shaped openings between the tubes, allows the characteristics of the fishing rod to be varied as desired.

Molding in of apertures, or ports, at selected locations results in a double opposing arch construction. What is contributing to the structure, is the "double arch effect" of the ports, which are oval in shape creating two opposing arches which allow the tubular part to deflect, while retaining the cross sectional shape of the tube because of the three dimensional wall structure provided by the port. For example, a ported double tube structure has a combination of exterior walls, which are continuous and form the majority of the structure, and ported walls, which are oriented at an angle to the exterior walls, which provide strut like reinforcement to the tubular structure. The cylindrical walls of the ports prevent the cross section of the tube from collapsing, which significantly improves the strength of the structure.

The stiffness and resiliency of the ported double tube structure can be adjusted to be greater or less than a standard single hollow tube. This is because of the option of orienting the internal wall between the tubes as well as the size, shape, angle and location of the ports.

The ports can be stiff if desired, or resilient allowing more deflection and recovery, or can be designed using different materials or a lay-up of different fiber angles in order to produce the desired performance characteristics of the structure.

The structure can be further refined by using more than two tubes. For example, using three tubes allows for apertures to occur in 120 degree offsets, providing specific stiffness tailoring along those directions.

Using four tubes provides the possibility of having apertures at ninety degree angles to each other and alternately located along the length of the tubular part to achieve unique performance and aesthetic levels.

Another option is to locate the multiple ports in the same location to achieve more of an open truss design.

Another option is to combine a single composite tube with a multiple tube composite design. In this example, the single composite tube can be a portion of the fishing rod made in the traditional method previously mentioned, and co-molded with the multiple tubes to produce a lower cost alternative to a 100 % multiple tube construction.

Referring again to Figs. 6-7, in order to make this construction, the forward ends 62 of a pair of prepreg tubes 60a, 60b, each having an inflatable bladder 64, are inserted into one end 65 of a traditional composite tube 66.

The unit is placed inside a mold having the same shape of the composite tube 66, at least at the juncture 70 of the prepreg tubes 60a, 60b and the composite tube 66.

A pin or mold member (not shown) is placed between the prepreg tubes 60a, 60b where a port 30 is to be formed. The mold is then closed and heated, as the bladders 64 are inflated, so that the prepreg tubes assume the shape of the mold, the mold member keeping the facing walls 71a, 71b apart so as to form the port 30. As shown, the tubes 60a, 60b will form a common wall at seam 72. After the prepreg tubes have cured, the frame member 74 is removed from the mold, and the mold member or pin is removed, leaving the port 30. In this embodiment, the seam 70 between the graphite portions 60a, 60b of the frame member 74 and the composite tube portion 66 should be flush.

The tube portion 66 may also be made of metal.

There is a very distinguished appearance to a fishing rod made according to the invention.

The ports are very visible, and give the tubular part a very light weight look, which is important in rod marketing. The ports can also be painted a different color, to further enhance the signature look of the technology.

There are unlimited combinations of options when considering a double opposing arch structure. The ports can vary by shape, size, location, orientation and quantity. The ports can be used to enhance stiffness, resilience, strength, comfort and aesthetics. For example in a low stress region, the size of the port can be very large to maximize its effect and appearance.

If more deflection or resilience is desired, the shape of the aperture can be very long and narrow to allow more flexibility.

The ports may also use designer shapes to give the product a stronger appeal.

If more vibration damping is desired, the ports can be oriented and shaped at a particular angle, and constructed using fibers such as aramid or liquid crystal polymer. As the port deforms as a result of rod deflection, its return to shape can be controlled with these viscoelastic materials which will increase vibration damping.

Another way to increase vibration damping is to insert an elastomeric material inside the port.

Another advantage of the invention could be to facilitate the attachment to the reel.

Having a port at the handle portion of the rod that where the reel will attach provides a mechanical means of attachment to the reel to better secure it to the rod.

Figure 8 shows such an example of the handle end 12 of fishing rod 10 molded with using two tubes 22 that form an internal wall 24 in between. A recessed area 78 is formed in the rod to accommodate the foot 80 of the reel 82. Ports 84 are formed in the recessed area 78 that line up with the holes 86 in the foot 80 of the reel 82. A fastening means attaches the foot 80 to the recessed area 78 going through the holes 86 and ports 84.

An advantage of the recessed area 78 is that it reduces the distance of the axis of the reel to the center of the rod. This facilitates releasing the line through the guides for increased casting distances as well as enhanced feel.

Another option is for the fishing line to travel from the reel through a port in the rod to the opposite side of the rod. This would provide an advantage for reel designs that operate on the top side of the rod, yet position the line and guides on the bottom side of the rod, which is a preferred location because it is more stable. It should be noticed that such a solution is not possible with conventional rod designs.

With respect to the above description then, it is to be realized that the optimum dimensional relationships for the parts of the invention, to include variations in size, materials, shape, form, function and manner of operation, assembly and use, are deemed readily apparent and obvious to one skilled in the art, and all equivalent relationships to those illustrated in the drawings and described in the specification are intended to be encompassed by the present invention.

Therefore, the foregoing is considered as illustrative only of the principles of the invention.

Further, since numerous modifications and changes will readily occur to those skilled in the art, it is not desired to limit the invention to the exact construction and operation shown and described, and accordingly, all suitable modifications and equivalents may be resorted to, falling within the scope of the invention.

## Claims

1. A fishing rod (10) **characterized in that** it comprises at least two hollow tubes (22), first portions (22a) of said tubes forming an outer wall (10a) of said rod and defining an interior (10b) of said rod, second portions (22b) of said tubes extending across the interior of said rod and being bonded to one another, at least along some of the length of said rod, thereby to form an internal reinforcing wall (24).

2. A fishing rod, according to claim 1, **characterized in that** said rod is formed of a double tube construction.

3. A fishing rod, according to claim 1, **characterized in that** said rod is formed of a triple tube construction.

4. A fishing rod, according to claim 1, **characterized in that** said rod is formed of four tubes.

5. A fishing rod, according to one or more of the previous claims, **characterized in that** said second portions are separated from one another at least at one axial location so as to form at least one port (20, 20a).

6. A fishing rod, according to claim 5, **characterized in that** said at least one port has a double opposing arch structure.

7. A fishing rod, according to one or more of the claims from 5 to 6, **characterized in that** said second portions are separated from one another at selected locations to form multiple ports.

8. A fishing rod, according to claim 7, **characterized in that** said rod has multiple double opposing arch shaped ports.

9. A fishing rod, according to claim 8, **characterized in that** said ports have an axis (201) therethrough, and wherein at least two of said ports have different axial orientations.

10. A fishing rod, according to one or more of the claims from 8 to 9, **characterized in that** said rod includes ports which vary in size.

11. A fishing rod, according to one or more of the claims from 8 to 10, **characterized in that** said rod includes at least three ports, wherein each port has a central axis therethrough, and wherein the axes of said ports are spaced apart from one another.

12. A fishing rod, according to one or more of the previous claims, **characterized in that** it comprises at least a portion made of one or more of the following materials: a composite material, a metal material, a plastic material.

13. A fishing rod, according to one or more of the claims from 5 to 12, **characterized in that** it comprises a reel and a fishing line operatively associated to said reel, said fishing line traveling from said reel through at least a port of said rod.

14. A method for manufacturing a fishing rod **characterized in that** it comprises the following steps:
- providing at least a pair of prepreg tubes (60a, 60b), each of said prepreg tubes having an internal inflatable bladder (64) positioned therein; and
- positioning each of said prepreg tubes into a cavity of a mold; and
- closing and heating said mold and pressurizing said inflatable bladders.

15. A method, according to claim 13, **characterized in that** it comprises also the following step:
- inserting one or more pins between said prepreg tubes, in order to form one or more ports.
